# EUROPEAN PATENT APPLICATION

(11) **EP 2 581 306 A2**
(43) Date of publication of application: **17.04.2013**
(21) Application number: 12380035.1
(22) Date of filing: 26.06.2012
(51) Int. Cl.: B64C 25/40

(54) **Wheel drive device for Landing Gear**

(30) Priority: 04.08.2011 ES 201100712 U
(71) Applicant: Torres, Angel Bartolome, 28939 Arroyomolinos, Madrid (ES)
(72) Inventor: Torres, Angel Bartolome, 28939 Arroyomolinos, Madrid (ES)

(57) **Abstract**

As the plane approaches the runway for landing, the support device undercarriage (1) drives a generating element of movement (electrical, hydraulic, or pneumatic) which turns the wheels to a suitable speed so that they enter in touch with the track of a soft form and reducing considerably the friction that takes place at the moment.
During take off, the support device undercarriage (1) supports the acceleration of the plane, allowing to obtain the necessary speed for take off in a shorter distance.

## Description

The invention consists of a device capable of generating movement and transmitting it to the wheels of the plane at the times of take-off and landing.

This device operates in the undercarriage of the aircraft and is placed in the same. The drive unit is controlled by an electronic device which measures the speed of the plane and sends the necessary power in order to adapt the rotation of the wheels during the landing phase, or alternatively sends the maximum power to improve acceleration during the take-off.

### DESCRIPTION OF THE DRAWINGS

Figures 1 & 2, show a front and lateral view of an undercarriage powered by a pneumatic turbine.
Figures 3 & 4, show a front and lateral view of an undercarriage powered by an electric motor.

### DESCRIPTION OF A PREFERRED FORM OF EMBODIMENT.

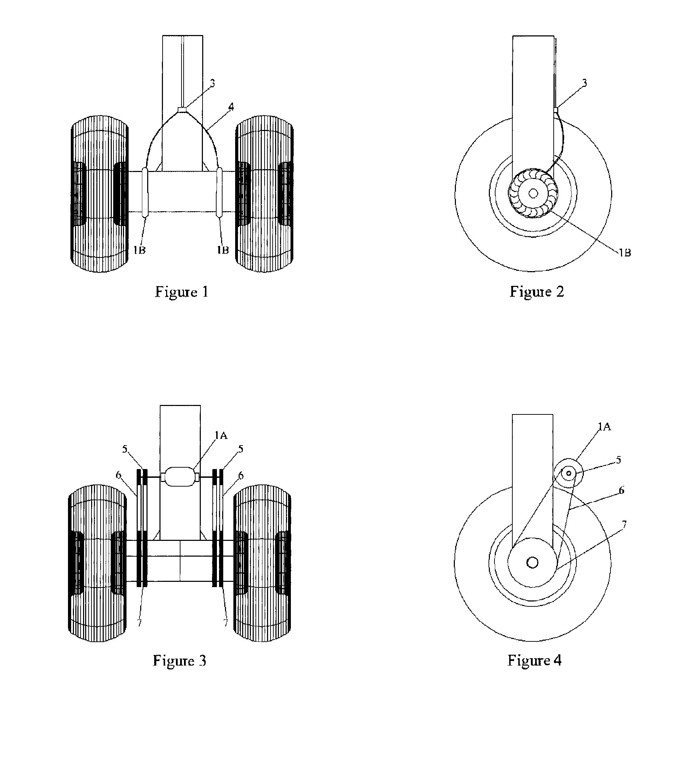

Using figures 1 & 2 as a reference, it can be observed that valve 3 receives air from a pipe 4 coming from the aircraft compressors. An electronic device controls valve 3 in order to allow the air to pass through to turbines 1B and make the wheels turn at the right times.

In figures 3 & 4 we can see the electric motor 1A, which is attached to the main pulley 5 through a shaft. Pulley 5 transmits movement to the secondary pulley 7 by means of a belt 6. Pulley 7 is mounted on the wheels' shaft.

Likewise, the electric motor 1A is operated by an electronic device that is sending the required power.

## Claims

1. A DEVICE SUPPORTING THE UNDERCARRIAGE which features a drive unit (1) capable of generating movement and transmitting it to the wheels of the aircraft. The drive unit (1) may be:
1A. An electric motor acting as the drive unit (1).
1B. A pneumatic turbine acting as the drive unit (1).
1C. A hydraulic pump acting as the drive unit (1),

2. A DEVICE SUPPORTING THE UNDERCARRIAGE, as in the first claim, in which the drive unit (1) is unable to transmit movement directly to the wheels of the plane and it is thus equipped with a mechanical device (2) which can be made up of either: pulleys, belts, strings, shafts and/or gear assemblies, in order to allow movement to pass from the drive unit (1) to the wheels of the aircraft.
